# EUROPÄISCHE PATENTSCHRIFT

(11) **EP 0 374 402 B1**
(45) Veröffentlichungstag und Bekanntmachung des Hinweises auf die Patenterteilung: **10.02.1993**
(21) Anmeldenummer: 89119047.2
(22) Anmeldetag: 13.10.1989
(51) Int. Cl.: C10L 5/10

(54) **Verfahren zur Reduzierung der Verbrennungstemperatur im Verbrennungsraum eines Ofens oder Heizkessels, der mit Brennstoff-Briketts beheizt wird**
Process to decrease the combustion temperature in the combustion chamber of a fuel briquettes-fired oven or boiler
Procédé pour réduire la température de combustion dans la chambre de combustion d'un four ou d'une chaudière chauffés par des briquettes de combustible

(30) Priorität: 23.12.1988 DE 3843449
(43) Veröffentlichungstag der Anmeldung: 27.06.1990
(73) Patentinhaber: APPLIED INDUSTRIAL MATERIALS CORPORATION AIMCOR, Deerfield Illinois 60015 (US)
(72) Erfinder: Lask, Gert-Wilhelm, Dr. Dipl.-Chem., D-6636 Ueberherrn-Berus (DE)
(74) Vertreter: Andrejewski, Walter

(56) Entgegenhaltungen:
- DE-A- 3 727 464
- DE-C- 476 319
- GB-A- 219 772
- US-A- 2 036 642
- US-A- 4 111 755
- US-A- 4 515 601

## Beschreibung

Die Erfindung bezieht sich auf die Reduzierung der Verbrennungstemperatur im Verbrennungsraum eines Ofens oder Heizkessels, der mit Brennstoff-Briketts beheizt wird. - Brennstoff-Briketts bezeichnet solche, die für die Wärmeerzeugung im Hausbrand, in Heizungskesselfeuerungen, in Heizkraftwerken und dergleichen eingesetzt werden.

Brennstoff-Briketts, die als feinteiligen Kohlenstoffträger Petrolkoks oder hauptsächlich Petrolkoks aufweisen, lassen bei der Verbrennung sehr hohe Temperaturen entstehen, die die Verbrennungseinrichtungen gefährden. Sie besitzen eine nicht ausreichende Festigkeit und zerfallen leicht beim Handling und bei der Verbrennung. Derartige Brennstoff-Briketts erzeugen bei der Verbrennung zu hohe Temperaturen und zerstören die für die Verbrennung eingesetzten Apparate vom einfachen Ofen bis zum Heizungskessel. Petrolkoks weist häufig in erheblichem Maße Schwefel, z. B. in Mengen von 0,8 bis 6% oder mehr, auf. Das gilt auch für das Bindemittel, insbesondere wenn als solches Pech eingesetzt ist. Insoweit erzeugen Brennstoff-Briketts, die als feinteiligen Kohlenstoffträger Petrolkoks oder hauptsächlich Petrolkoks aufweisen, in zu hohem Maße Schwefeldioxid und aus anderen Gründen auch Stickoxide. Letzteres gilt auch für Briketts der eingangs beschriebenen Zusammensetzung (US-Patent 20 36 642), die zum Zwecke der Erhöhung der Festigkeit mit Hilfe einer besonderen Bindemittelmischung, die auch Calciumhydroxid als Binder in einer Menge von etwa 2 Gew.-% aufweist, hergestellt werden. Hier wird die Ausgangsmischung umgeformt bei etwa 250 °C wärmebehandelt und nach Abkühlung zu den fertigen Brennstoff-Briketts geformt.

Zum Entschwefeln von Briketts auf der Basis von kohlenstoffhaltigem Material, z. B. Kohle und/oder Perolkoks, ist es bekannt, Schwefelbinder in einer Menge von 10 bis 30 Gew.-% beizugeben (US 45 15 601). Ferner ist es bekannt, Rohbriketts einer Wärmebehandlung zu unterziehen, die dazu dient, die Wetterbestän- digkeit der Rohbriketts zu verbessern (US 41 11 755).

In der Praxis sind versuchsweise Brennstoff-Briketts mit feinteiliger, aschereicher Steinkohle als Kohlenstoffträger bekannt geworden, denen man unter Berücksichtigung stöchiometrischer Gesichtspunkte feinteiliges Calciumcarbonat als Entschwefelungsmittel beigegeben hat. Die bei solchen Brennstoff-Briketts auftretenden Verbrennungstemperaturen sind unproblematisch und werden von dem Aschegehalt der Steinkohle bestimmt. Die angestrebte Entschwefelung ist unbefriedigend, entsprechende Brennstoff-Briketts haben in die Praxis kaum Eingang gefunden.

Der Erfindung liegt die Aufgabe zugrunde, die Verbrennungstemperatur im Verbrennungsraum eines Ofens oder Heizkessels, der mit Brennstoff-Briketts beheizt wird zu reduzieren.

Diese Aufgabe wird gelöst mit einem Verfahren zur Reduzierung der Verbrennungstemperatur im Verbrennungsraum eines Ofens oder Heizkessels, welches dadurch gekennzeichnet ist, daß Brennstoff-Briketts mit einem feinteiligen Kohlenstoffträger, der eine Körnung von unter 3 mm aufweist, bestehend aus hauptsächlich Petrolkoks und außerdem Kohle (vorzugsweise nichtbackender Kohle) mit einem Bindemittel und mit einem eingemischten feinteiligen Verbrennungs-Inhibitor in Form von Calciumcarbonat und/oder Dolomit, der eine Körnung von unter 1 mm aufweist und in einer Menge von über 2 Gew.-% der Ausgangsmischung beigegeben worden ist, wobei flüchtige Bestandteile aus den Brennstoff-Briketts durch eine Wärmebehandlung von 100 °C bis 500 °C ausgetrieben sind, verwendet werden. - Flüchtige Bestandteile bezeichnet Wasserdampf, aber auch Kohlenwasserstoffe. Versuche haben gezeigt, daß schon bei sehr niedrigen Temperaturen flüchtige Bestandteile frei werden. Die flüchtigen Bestandteile stammen aus der Ausgangsmischung, z. B. aus dem Bindemittel. Wo keine flüchtigen Bestandteile vorhanden sind, erfolgt die Wärmebehandlung nichtsdestoweniger. Eine befriedigende Wärmebehandlung erreicht man bereits bei Temperaturen von wenig über 100 °C. Die Temperatur der Wärmebehandlung soll 500 °C nicht überschreiten. Bei den Brennstoff-Briketts erfüllen das Calciumcarbonat und/oder der Dolomit einen neuen Zweck, nämlich den eines Verbrennungs-Inhibitors. Der Zusatz an Calciumcarbonat und/oder Dolomit ist in zu diesem Zweck ausreichender Menge sowie mit zu diesem Zweck ausreichender Feinheit in die Ausgangsmischung eingemischt worden. Bei der Wärmebehandlung erfahren die Brennstoff-Briketts eine Härtung. Sie zerfallen beim Handling nicht. Sie behalten darüber hinaus bei der Verbrennung ausreichend, wenn auch abbrennend, ihre Form. Es bildet sich so bei der Verbrennung der Brennstoff-Briketts immer wieder eine ausreichend dicke calciumhaltige Ascheschicht um die einzelnen Briketts, die den nicht verbrannten Kern gleichsam wie eine geschlossene Schale umhüllt und die für den für die Verbrennung des Kohlenstoffträgers erforderlichen Sauerstoff eine Diffusionssperre bildet, die nur soviel Sauerstoff passieren läßt, daß störend hohe Temperaturen nicht auftreten. So wird die Menge des beigemischten Verbrennungs-Inhibitors eingestellt, vorzugsweise in einer Menge von 3 Gew.-% der Ausgangsmischung. Die Ascheschicht wird beim Abbrand mit kleiner werdendem Durchmesser des nicht verbrannten Kerns dicker und als Schale stabiler, so daß während der gesamten Verbrennung der Brennstoff-Briketts störend hohe Temperaturen nicht auftreten. Andererseits reichen die Temperaturen aus für die Entschwefelung, wobei sich Calciumsulfit oder Calciumsulfat bzw. Magnesiumsulfit oder Magnesiumsulfat bilden, die in die Asche gehen. Es kann daher auch mit hoch schwefelhaltigem Petrolkoks gearbeiten werden. Der Entschwefelungsgrad erreicht 80 % und mehr.

Bewährt haben sich Brennstoff-Briketts, bei denen das Bindemittel ein bituminöses Brikettierungs-Bindemittel, z. B. Pech, ist, welches in einer Menge von 5 bis 10 Gew.-%, vorzugsweise in einer Menge von etwa 8 Gew.-% der Ausgangsmischung beigemischt worden ist. Bewährt haben sich aber auch Brennstoff-Briketts, bei denen das Bindemittel Sulfitablauge ist, welche in einer Menge von 5 bis 10 Gew.-%, vorzugsweise in einer Menge von etwa 6 Gew.-%, der Ausgangsmischung beigemischt worden ist. Man kann im Rahmen der Erfindung mit anderen Bindemitteln arbeiten. Vorzugsweise ist der Verbrennungs-Inhibitor ausschließlich Calciumcarbonat. Die Körnung des Kohlenstoffträgers in den erfindungsgemäßen Brennstoff-Briketts soll nicht zu groß, jedoch regelmäßig unter 3 mm sein. Einige Anteile größerer Körnung stören nicht. Die Körnung des Verbrennungs-Inhibitors ist so einzustellen, daß die beschriebenen Effekte erreicht werden. Insoweit wird zweckmäßigerweise mit einer Körnung von unter 1 mm gearbeitet.

Die im Rahmen der erfindungsgemäßen Verfahrens verwendeten Brennstoff-Briketts können auf verschiedene Weise mit den üblichen Hilfsmitteln der Brikettierungstechnik hergestellt werden. Insbesondere kann mit Brikettierpressen gearbeiten werden. Zur Herstellung von Brennstoff-Briketts der angegebenen Zusammensetzung werden der feinteilige Kohlenstoffträger, das Bindemittel und der feinteilige Verbrennungs-Inhibitor gemischt und aus der Mischung Vorformlinge geformt und dann die Vorformlinge durch eine Wärmebehandlung bei einer Temperatur unterhalb der Reaktionstemperatur des Verbrennungs-Inhibitors gehärtet und von den flüchtigen Bestandteilen, soweit solche vorhanden sind, ausreichend vollständig befreit. Schon bei 300 °C werden auch Kohlenwasserstoffe frei. Bei Temperaturen ab 100 °C auch Wasser dampf, wenn die Vorformlinge Wasser enthalten. Die Wärmebehandlung kann in einem Drehrohrofen durchgeführt werden, der ein Tauchbett für die Vorformling aufweist, welches aus feinteiligem Petrolkoks besteht (vgl. DE P 37 27 464.3-24). In dem Tauchbett erfolgt die beschriebene Härtung besonders schonend.

## Patentansprüche

1. Verfahren zur Reduzierung der Verbrennungstemperatur im Verbrennungsraum eines Ofens oder Heizkessels, **dadurch gekennzeichnet**, daß Brennstoff-Briketts mit einem feinteiligen Kohlenstoffträger, der eine Körnung von unter 3 mm aufweist, bestehend aus hauptsächlich Petrolkoks und außerdem Kohle (vorzugsweise nichtbackender Kohle) mit einem Bindemittel und mit einem eingemischten feinteiligen Verbrennungs-Inhibitor in Form von Calciumcarbonat und/oder Dolomit, der eine Körnung von unter 1 mm aufweist und in einer Menge von über 2 Gew.% der Ausgangsmischung beigegeben worden ist, wobei flüchtige Bestandteile aus den Brennstoff-Briketts durch eine Wärmebehandlung von 100 °C bis 500 °C ausgetrieben sind, verwendet werden.

## Claims

1. A method of reducing the combustion temperature in the combustion chamber of a furnace or heating boiler, characterised in that fuel briquettes are used, with a granular carbon carrier which has a grain size of less than 3 mm, mainly comprising petroleum coke and in addition comprising coal (preferably non-caking coal) with a binder and with an admixed granular combustion inhibitor in the form of calcium carbonate and/or dolomite which has a grain size less than 1 mm and is added in an amount greater than 2 weight % of the starting mixture, wherein volatile constituents are expelled from the fuel briquette by heat-treatment from 100°C to 500°C.

## Revendications

1. Procédé pour réduire la température de combustion dans la chambre de combustion d'un four ou d'une chaudière, caractérisé en ce qu'on utilise des briquettes de combustible comportant un support en carbone finement divisé, qui possède une taille de grains inférieure à 3 mm et est constitué principalement par du coke de pétrole et en outre par du charbon (de préférence cokéfiant) avec un liant et un inhibiteur de combustion finement divisé, mélangé, sous la forme de carbonate de calcium et/ou de dolomite, qui possède une taille de grains inférieure à 1 mm et a été ajouté en une quantité supérieure à 2 % en poids au mélange de départ, des constituants volatils étant extraits des briquettes de combustible au moyen d'un traitement thermique entre 100°C et 500°C.
